# EUROPEAN PATENT APPLICATION

(11) **EP 4 425 866 A1**
(43) Date of publication of application: **04.09.2024**
(21) Application number: 22885240.6
(22) Date of filing: 28.07.2022
(51) Int. Cl.: H04L 41/0893

(54) **SERVICE SLICE ADJUSTMENT METHOD, ELECTRONIC DEVICE, AND STORAGE MEDIUM**

(30) Priority: 25.10.2021 CN 202111241569
(71) Applicant: ZTE Corporation, Shenzhen, Guangdong 518057 (CN)
(72) Inventor: SHEN, Shaowu, Shenzhen, Guangdong 518057 (CN)
(74) Representative: Boult Wade Tennant LLP
(86) International application number: PCT/CN2022/108688
(87) International publication number: WO 2023/071340

(57) **Abstract**

Disclosed in the present application are a service slice adjustment method, an electronic device, and a storage medium. The method is applied to a terminal and includes: acquiring a service demand parameter of an application service slice configured for a terminal and a current network parameter of the terminal, wherein the service demand parameter includes a service demand parameter of each sub-slice of the application service slice (101); and adjusting the parameter of each sub-slice of the application service slice according to the service demand parameter and the current network parameter (102).

## Description

### CROSS REFERENCE TO RELATED APPLICATIONS

The present application is based on and claims priority to Chinese Patent Application No. 202111241569.3, filed on October 25, 2021, the entire contents of which are hereby incorporated by reference herein.

### TECHNICAL FIELD

Embodiments of the present disclosure relate to the technical field of communication, in particular to a service slice adjustment method, an electronic device, and a storage medium.

### BACKGROUND

With the development and evolution of 5G terminals, a single network service design can no longer satisfy the multi-service and multi-scenario demands of 5G. Based on different service and scenario demands, end-to-end network resources are customised, allocated and scheduled differently, which is called slicing. A 5G network slicing technology can be divided into several parts including 5G network architecture slicing, core network slicing, transmission network slicing, and wireless network slicing. According to different slices, demands for a throughput, a bandwidth, a delay and reliability network communication quality in different service scenarios can be satisfied. In view of differentiated demands of users, a base station system side has had corresponding differentiated slicing strategy designs, such as according to the current three major application scenarios of 5G, a network slicing scheme oriented to an enhanced mobile broadband applied to a large-bandwidth and large-data-volume service , a network slicing scheme applied to millisecond low-delay communication, and a network slicing scheme applied to high network density and coverage in the field of Internet of Things.

At present, the network slicing scheme is only performed on a core network side, followed by a wireless access network layer and a transmission network layer, which brings a result that reasonable scheduling of terminal resources on a terminal side according to different service scenarios and user demands cannot be achieved.

### SUMMARY

Main objects of embodiments of the present disclosure are to provide a service slice adjustment method, an electronic device, and a storage medium, which aim at achieving reasonable scheduling of terminal resources on a terminal side according to a service scenario and a user demand of an application service slice.

In order to at least achieve the above-mentioned object, an embodiment of the present disclosure provides a service slice adjustment method applied to a terminal and including: acquiring a service demand parameter of an application service slice configured for a terminal and a current network parameter of the terminal, wherein the service demand parameter includes a service demand parameter of each sub-slice of the application service slice; and adjusting a parameter of each sub-slice of the application service slice according to the service demand parameter and the current network parameter.

In order to achieve the above-mentioned object, an embodiment of the present disclosure further provides an electronic device including: at least one processor; and a memory in communication connection with the at least one processor; wherein the memory stores an instruction executable by the at least one processor, and the instruction is executed by the at least one processor to enable the at least one processor to execute the above-mentioned service slice adjustment method.

In order to achieve the above-mentioned object, an embodiment of the present disclosure further provides a computer-readable storage medium, storing a computer program, wherein the computer program, when executed by a processor, implements the above-mentioned service slice adjustment method.

### BRIEF DESCRIPTION OF THE DRAWINGS

Fig. 1 is a flowchart of a service slice adjustment method provided in an embodiment of the present disclosure;
Fig. 2 is a flowchart of a service slice adjustment method provided in an embodiment of the present disclosure;
Fig. 3 is a flowchart of a service slice adjustment method provided in an embodiment of the present disclosure;
Fig. 3a is a schematic structural diagram of a hard slicing circuit adjustment manner provided in an embodiment of the present disclosure;
Fig. 3b is a schematic structural diagram of a soft slicing program adjustment manner provided in an embodiment of the present disclosure;
Fig. 4 is a flowchart of a service slice adjustment method provided in an embodiment of the present disclosure;
Fig. 5 is a flowchart of a service slice adjustment method provided in an embodiment of the present disclosure;
Fig. 6 is a schematic structural diagram of a service slice adjustment apparatus provided in an embodiment of the present disclosure; and
Fig. 7 is a schematic structural diagram of an electronic device provided in an embodiment of the present disclosure.

### DETAILED DESCRIPTION

In order to make objects, technical solutions and advantages of the embodiments of the present disclosure clearer, all the embodiments of the present disclosure will be described in detail below in conjunction with accompanying drawings. However, it can be understood by those of ordinary skill in the art that, in order to make a reader better understand the present disclosure, a plurality of technical details are provided in all the embodiments of the present disclosure. However, the claimed technical in the present disclosure can also be achieved even if there are no these technical details as well as various changes and modifications based on each of the following embodiments. All of the following embodiments are divided for convenience of description, but should not constitute any limitations on the specific implementations of the present disclosure, and all the embodiments can be combined and referred to each other without contradiction.

In view of differentiated demands of users, a base station system side has had corresponding differentiated slicing strategy designs, such as according to the current three major application scenarios of 5G, a network slicing scheme applied to a large-bandwidth and large-data-volume service and oriented to an enhanced mobile broadband, a network slicing scheme applied to millisecond low-delay communication, and a network slicing scheme applied to high network density and coverage in the field of Internet of Things. For users on a 5G terminal side, if terminal users need high-speed uploading and downloading, high-definition videos and voices, multi-player online games, multi-player online live broadcast, high definition, etc., the required throughput will be very high, at the moment, slicing in a high-speed throughput mode; is needed and if the terminal users only perform WeChat chat, web browsing, and small file transmission, the required throughput will be low accordingly, at the moment, only slicing in a low-speed throughput mode is needed. Traditional network slicing is only performed on a core network side, followed by a wireless access network layer and a transmission network layer, but is not mentioned on a terminal side. If there is no slicing on the terminal while the throughput and channel from the system allocation or current work are redundant, waste of traffic and power consumption will be caused; and if the allocated throughput and channel are insufficient, or the channel is blocked and a serious error code is caused, lagging and unsmoothness in actual use will be caused.

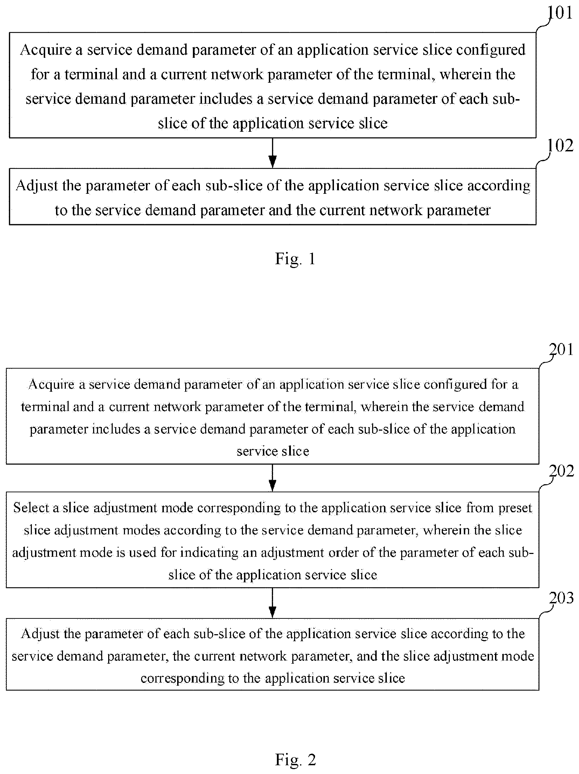

An embodiment of the present disclosure relates to a service slice adjustment method applied to a terminal side, as shown in Fig. 1, including:
At step 101, a service demand parameter of an application service slice configured for a terminal and a current network parameter of the terminal are acquired, wherein the service demand parameter includes a service demand parameter of each sub-slice of the application service slice.

In an exemplary implementation, the application service slice of the terminal is simply divided into a data service slice and a call service slice, which according to application, specifically includes a high-speed throughput application service slice such as high-speed downloading and uploading, high-definition videos, high-definition video calls, high-traffic games, cloud services, augmented reality, and virtual reality, and a low-speed throughput application service slice of an application such as a network chat service, web browsing, single-player small games, mobile payment, mobile reading, and low-speed transmission. Due to different natures of services, network types, uploading and downloading traffic demands, delays, and the number of simultaneous access terminals required for the above-mentioned different services are different. For the same application service slice (such as a game service slice), there will be different real-time demands, such as a single-player online game service slice, a multi-player online game service slice, a low-resolution game service slice, a high-resolution game service slice, a 2D game service slice, a 3D game service slice, etc.; due to the different screens, resolutions, plots, and maps as well as 3D or not of different game service slices, slice parameters required for the game service slice are different.

In an exemplary implementation, the service demand parameter may include information such as a throughput, a throughput rate, a spectral range (i.e., an operating frequency point), a spectral bandwidth, an interference parameter, and an uplink power parameter. The service demand parameter of the application service slice configured for the terminal can be acquired by the following four methods.

First method: when the application service slice opened by the terminal is detected, a radio frequency information parameter set of the terminal is collected, and statistical analysis is performed on the radio frequency information parameter set to acquire the service demand parameter of the application service slice.

Second method: when the application service slice opened by the terminal is detected, a delay when the application service slice is opened and the application service slice is operated is acquired, a speed of opening the application service slice is acquired, and the service demand parameter of the application service slice is acquired according to the delay, the speed, and a preset target threshold.

Third method: slice network information of a core network, a bearing network and a transmission network of a base station is issued to the terminal by specific messages, and after the terminal receives the affected slice network information, the slice network information transmitted by the base station is used as the service demand parameter of the application service slice of the terminal.

Fourth method: service demand information set on a user interface (UI) refers to special slice demand applications and settings from a terminal user. The settings are achieved in a settings menu on the UI of the terminal, a user by means of a defined switching window and options can set slice demand information such as : the maximum uplink throughput, the maximum downlink throughput, a service matching network speed throughput, the minimum delay throughput, the minimum power consumption throughput, an enhanced signal throughput, a game mode throughput, a high-definition video mode throughput, a cooling mode throughput, and a red packet slicing mode throughput, of the terminal side.

In an exemplary implementation, the first and second methods can be combined. After different weighted parameters are set for the parameters collected by using the first and second methods, the service demand parameter is acquired by using a weighting method.

In an exemplary implementation, the current network parameter may include a throughput, a network speed, a throughput rate, a spectral range (i.e., an operating frequency point), a spectral bandwidth, an interference parameter, an uplink power parameter, etc. The current network parameter is acquired by analyzing the current radio frequency information parameter set of the terminal.

At step 102, a parameter of each sub-slice of the application service slice is adjusted according to the service demand parameter and the current network parameter.

In an exemplary implementation, the parameter of each sub-slice of the application service slice may include a parameter of a throughput sub-slice, a parameter of a power sub-slice, a parameter of a bandwidth sub-slice, a parameter of a spectral sub-slice, a parameter of an interference sub-slice, a parameter of a resource block (called RB for short) sub-slice, etc. When it is detected that the service demand parameter differs from the current network parameter (that is, the service demand parameter is not the same as the current network parameter, or the difference is greater than a preset threshold), the parameter of each sub-slice is adjusted to a parameter value corresponding to the service demand parameter.

According to the service slice adjustment method provided in the present disclosure, in a process of performing resource scheduling on a terminal side, a service demand parameter of an application service slice configured for the terminal and a current network parameter of the terminal are acquired, wherein the service demand parameter includes a service demand parameter of each sub-slice of the application service slice; and a parameter of each sub-slice of the application service slice is adjusted according to the service demand parameter and the current network parameter. By adjusting the slice parameter of each application service slice according to the service demand parameter and the current network parameter of each application service slice, the terminal can perform resource scheduling according to a service scenario and a user demand of each application service slice, so that the problem that a peak of the application service slice does not reach the standard due to inappropriate terminal configuration is avoided, a balance is made between demands and terminal network resources, the effects of saving electricity and reducing heat are achieved, the reasonability of scheduling terminal resources and the utilisation ratio of the terminal resources are improved, and the problem in the prior art that reasonable scheduling of the terminal resources on the terminal side according to different service scenarios and user demands cannot be achieved because a network slicing scheme is only performed on a core network side is solved.

An embodiment of the present disclosure relates to a service slice adjustment method, as shown in Fig. 2, including:
At step 201, a service demand parameter of an application service slice configured for a terminal and a current network parameter of the terminal are acquired, wherein the service demand parameter includes a service demand parameter of each sub-slice of the application service slice.

In an exemplary implementation, the present step is approximately the same as step 101 in the embodiment of the present disclosure, and therefore, the repeated description thereof is omitted herein.

At step 202, a slice adjustment mode corresponding to the application service slice is selected from preset slice adjustment modes according to the service demand parameter, wherein the slice adjustment mode is used for indicating an adjustment sequence of parameters of each sub-slice of the application service slice.

In an exemplary implementation, since adjustment of the application service slice of a 5G terminal involves the parameter of each sub-slice (such as a throughput sub-slice, a power sub-slice, a spectral sub-slice, and an antenna sub-slice) of each application service slice, before the parameters of each sub-slice of the application service slice are adjusted, the adjustment sequence of the parameters of each sub-slice of the application service slice needs to be determined. Calculation can be performed according to a current service demand, connected base station information (which is optionally used for indicating an adjustment manner of the parameter of each sub-slice of the application service slice), own wireless parameter condition (which is optionally the current network parameter) and an internal parameter model (storing a preset slice adjustment mode and information such as the storage of peak uplink and downlink throughputs under different configurations of the application service slice and the storage of peak and mean uplink-downlink rates reached previously by different application software) of a module, and the most appropriate slice adjustment mode corresponding to the application service slice is matched.

Herein, it should be noted that the present disclosure can further achieve the storage of model parameters, test parameters and control parameters of each 5G slice (i.e., the application service slice) on the terminal side; including storage of slice parameters under different bandwidths, powers, spectra, interferences, resource blocks (RB), long term evolution (called LTE for short) and new radio (called NR for short), a carrier aggregation (called CA for short) mode, a sounding reference signal (called SRS for short) mode, a multiple-in multiple-out (called MIMO for short) mode, and an upper and lower antenna switching mode; at the same time, the storage of an adjustment parameter and a driver code of each slice is controlled; and peak uplink and downlink throughputs under different slice configurations and peak and mean uplink-downlink rates reached on all occasions by different application software are further stored. A throughput value required for storing the application software is refreshed in real time according to a lot of usage data.

Step 203, the parameter of each sub-slice of the application service slice is adjusted according to the service demand parameter, the current network parameter, and the slice adjustment mode corresponding to the application service slice.

In an exemplary implementation, the present step is approximately the same as step 102 in the embodiment of the present disclosure except that the adjustment sequence of the parameter of each sub-slice is added, and therefore, the repeated description thereof is omitted herein.

In the implementation of the present disclosure, on the basis of other embodiments, the adjustment sequence of the parameters of each sub-slice in the application service slice can be further acquired according to a current demand of the application service slice, and the parameters of each sub-slice are adjusted according to a priority, so that the efficiency of adjusting the application service slice is increased.

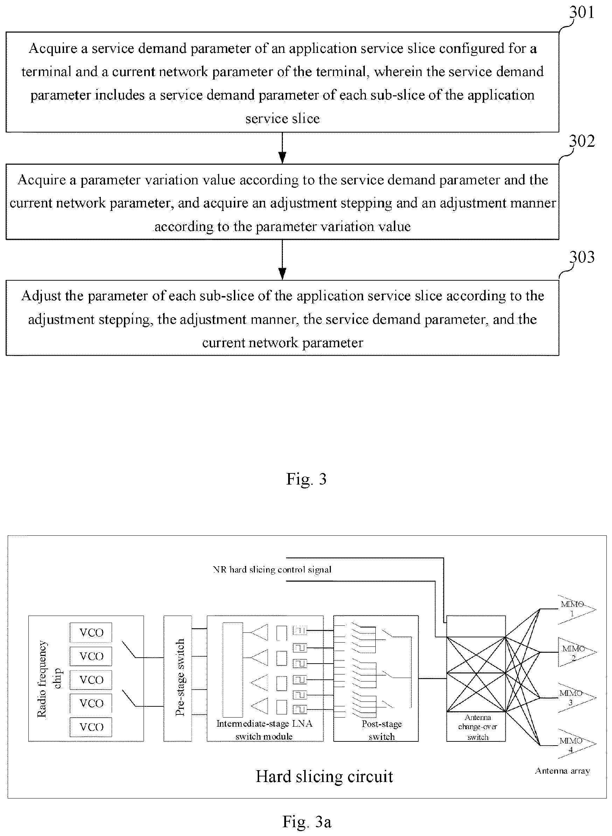

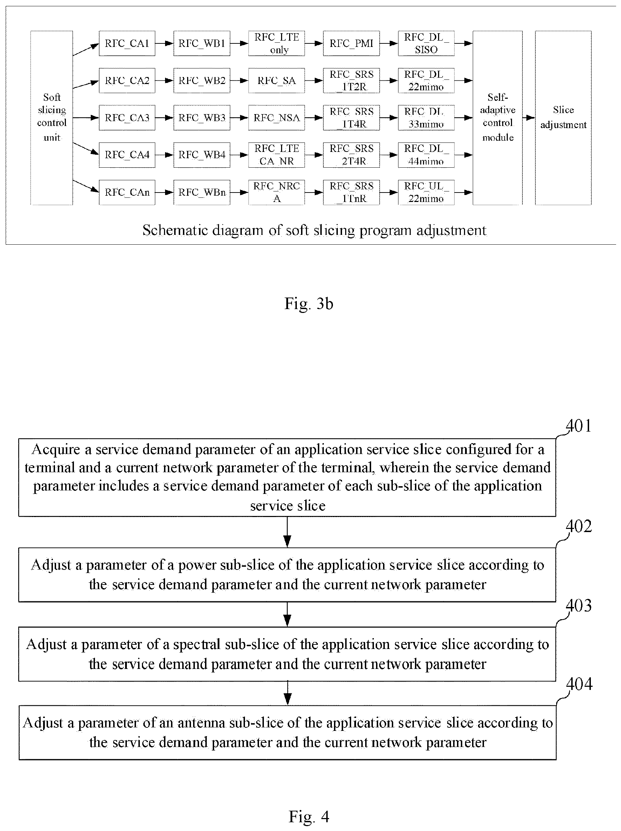

An embodiment of the present disclosure relates to a service slice adjustment method, as shown in Fig. 3, including:
At step 301, a service demand parameter of an application service slice configured for a terminal and a current network parameter of the terminal are acquired, wherein the service demand parameter includes a service demand parameter of each sub-slice of the application service slice.

In an exemplary implementation, the present step is approximately the same as step 101 in the embodiment of the present disclosure, and therefore, the repeated description thereof is omitted herein.

At step 302, a parameter variation value is acquired according to the service demand parameter and the current network parameter, and an adjustment stepping and an adjustment manner are acquired according to the parameter variation value.

In an exemplary implementation, parameter variation values obtained before and after the change are compared according to the current network parameter and the service demand parameter, one or two adjustment manners for the parameter of each sub-slice are selected, and the adjustment stepping is selected according to the parameter variation value.

In an exemplary implementation, the adjustment manner includes three manners including a hard slicing circuit adjustment manner, a soft slicing program adjustment manner, and a soft and hard combined adjustment manner.

In an exemplary implementation, the hard slicing circuit adjustment manner includes: a hard slicing circuit does not need to modify a radio frequency driver code, and switching is completed by a logic gate device built in the terminal. An input of a logic gate and switching device is a conventional general-purpose input/output (called GPIO for short), and an input signal is a slice indication signal of a base station or a slice indication signal outputted by a slicing mode mapping algorithm unit. The hard slicing circuit is achieved as follows: different network and service threshold slicing demands are detected by a multiway switch, and the current MIMO mode, SRS mode, power magnitude and sensitivity magnitude of the terminal are controlled. With the SRS mode of NR hard slicing as an example, the different network and service threshold slicing demands are detected by the multiway switch, circuit switching logic is controlled, and the current SRS mode of the terminal is forcedly changed into a plurality of modes such as PMI, 1T2R, 2T4R, and 1T4R. The hard slicing circuit is shown in Fig. 3a.

In an exemplary implementation, the soft slicing program adjustment manner includes parameter control and adjustment based on a soft slicing program, and soft slicing adjustment includes network standard slicing, terminal NR working bandwidth slicing, CA combined slicing, SRS working mode slicing, MIMO working mode slicing, and scheduling parameter slicing. There is a normal default radio frequency channel driver code in the terminal, which controls a mobile phone to work according to default parameters. An RFC configuration described herein which is usually not targeted is a large and comprehensive configuration incapable of satisfying demands of the corresponding service scenarios. A soft slicing control unit configures different slicing configurations by calling different radio frequency driver codes, that is, it controls network channel and working mode configurations under different services and demands by a radio frequency driver. As shown in Fig. 3b, according to the network standard slicing, an RFC is configured to be RFC_LTEonly, RFC_SA, and RFC_NSA; and according to the slicing bandwidth, the RFC is divided into a plurality of modes such as RFC_WB1, RFC_WB2, RF3_WB3, ...RFC WBn. By means of slicing based on different CA combination manners, a request for comments (called RFC for short) is divided into a plurality of modes such as RFC_CA1, RFC_CA2, RF3_CA3, ...RFC_CAn. By means of slicing based on different SRS working modes, the RFC is divided into a plurality of modes such as RFC_SRS_PMI, RFC_SRS_1T2R, RF3_SRS_1T4R, and RFC_SRS_2T4R. By means of slicing based on different MIMO working modes, the RFC is divided into a plurality of modes such as RFC_DL_SISO, RFC_DL_22mimo, RFC_DL_33mimo, RFC_DL_44mimo, RFC_UL_SISO, and RFC_UL_MIMO. By means of slicing based on different scheduling parameter working modes, such as current scheduling limit parameters MOD1, MOD2, MOD3, and MODn, the RFC is divided into a plurality of modes such as RFC MOD1, RFC MOD2, RFC MOD3, and RFC MODn.

In an exemplary implementation, the adjustment stepping can include small-granularity adjustment, medium-granularity adjustment, and large-granularity adjustment or any other appropriate-granularity adjustment stepping. For example, by comparing the current network throughput information and a target throughput, a corresponding-granularity adjustment manner is selected to satisfy differentiated network demands of different users and services. If the current uplink and downlink throughput increase demand is low, the terminal can be directly switched from an LTE mode to an LTE CA mode or an LTE MIMO mode. If the current uplink and downlink throughput increase demand is moderate, the terminal can be directly switched from the LTE mode to an SA mode or an NSA mode. If the current uplink and downlink throughput increase demand is high, the terminal can be switched from the current LTE mode to an NR CA mode or an NR CA plus LTE CA mode. The granularity is increased in sequence. Different granularities map different throughput adjustment thresholds and stepping, and the adjustment is realised by closed-loop optimisation until the service feature demands are satisfied.

Step 303, the parameter of each sub-slice of the application service slice is adjusted according to the adjustment step, the adjustment manner, the service demand parameter, and the current network parameter.

In an exemplary implementation, the present step is approximately the same as the adjustment method in step 102 in the embodiment of the present disclosure except that the adjustment manner and adjustment step for the parameter of each sub-slice are set, and therefore, the repeated description thereof is omitted herein.

In the implementation of the present disclosure, on the basis of other embodiments, an appropriate adjustment stepping and adjustment manner can also be selected according to a service demand of the application service slice and the current network parameter, so that the efficiency of adjusting the application service slice is increased.

An embodiment of the present disclosure relates to a service slice adjustment method applied to a terminal side, as shown in Fig. 4, including:
At step 401, a service demand parameter of an application service slice configured for a terminal and a current network parameter of the terminal are acquired, wherein the service demand parameter includes a service demand parameter of each sub-slice of the application service slice.

In an exemplary implementation, the present step is approximately the same as step 101 in the embodiment of the present disclosure, and therefore, the repeated description thereof is omitted herein.

At step 402, a parameter of a power sub-slice of the application service slice is adjusted according to the service demand parameter and the current network parameter.

In an exemplary implementation, when the sub-slice is the power sub-slice, the service demand parameter is a target uplink power parameter, and the current network parameter is a current uplink power parameter; and when the target uplink power parameter differs from the current uplink power parameter, the uplink power parameter of the power sub-slice is adjusted according to the target uplink power parameter. The uplink power parameter is adjusted by three adjustment methods: a maximum power limit adjustment method, an enhanced uplink power adjustment method, and a shared power adjustment method.

In an exemplary implementation, the maximum power limit adjustment method includes: a corresponding maximum transmitting power limit is called according to the target uplink power parameter and a service scenario; for example, an uplink maximum transmitting power limit of an NR is set, and uplink power limits of NSA and SA may also be different. In an NSA mode, a power level is 3, the default power of NR is 23dBm, and the maximum power is generally lower than 24.5dBm; and in an SA mode, the power level is 2, the default power is 25dB, and the maximum power is generally lower than 26.5dB. If an uplink signal of a current mobile phone is relatively weak, for a service of a user, the uplink power needs to be increased to improve the quality and throughput of the uplink signal. At the moment, the uplink power limit of NR needs to be increased by controlling an NR power slice. For a service scenario A, the maximum transmitting power limit of PowerA is called; for a service scenario B, the maximum transmitting power limit of PowerB is called; and in a general case, the default maximum power limit of PowerC is called.

In an exemplary implementation, the enhanced uplink power adjustment method includes: an uplink power parameter of the power sub-slice includes a master antenna power parameter and a standby antenna power parameter; firstly, the master antenna power parameter of the power sub-slice is adjusted according to the target uplink power parameter; and when the master antenna power parameter satisfies a preset power limit, the standby antenna power parameter of the power sub-slice is adjusted according to the target uplink power parameter, wherein the standby antenna power parameter can be adjusted by some passive device paths to reduce overall insertion loss and increase the power of a system, can be adjusted in a slicing way of modifying a power level to modify the conventional power level PC3 to a PC2 high-power mode, can be adjusted in a slicing way of modifying and calibrating the maximum target power to call a specific high-power calibrated slice parameter so as to increase the output of the maximum target power; besides, the adjustment can also be performed in a master and standby antenna compensation way, in which a standby antenna can perform certain power compensation as required, for example, the power of the master antenna of NR is 25dB, and the default power of the standby antenna is 22dB, the uplink power parameter can be compensated by 0-4dB according to specific demands of the current uplink service and network conditions to respectively obtain upper antenna slice power 22, 23, 24, 25, and 26.

In an exemplary implementation, the shared power adjustment method includes: when the power sub-slice is a shared power slice, the uplink power parameter includes an NR power parameter (5G) and an LTE anchor power parameter (4G); and values and proportions of the NR power parameter and the LTE anchor power parameter in the power sub-slice are adjusted according to the target uplink power parameter. For example, when LTE and NR work at the same time, if shared power control is set, LTE is allowed to reduce the power to a certain extent when NR works at the maximum transmitting power, and similarly, NR is also allowed to reduce the power to a certain extent when LTE works at the maximum power. Herein, the reduced power value of LTE or NR is sliced, for example, it is respectively reduced by 2dB, 4dB, 6dB, 8dB, 10dB, and 12dB, and NR power and LTE anchor power are adjusted according to a current service demand and network condition.

At step 403, a parameter of a spectral sub-slice of the application service slice is adjusted according to the service demand parameter and the current network parameter.

In an exemplary implementation, when the sub-slice is a spectral sub-slice, the service demand parameter is a target operating frequency point and a target throughput, and the current network parameter is a current operating frequency point and a current throughput; when the target operating frequency point differs from the current operating frequency point, a operating frequency point of the spectral sub-slice is adjusted according to the target operating frequency point; and when the target throughput differs from the current throughput, a target spectral bandwidth corresponding to the target throughput is acquired from a preset corresponding relation between a throughput and a spectral bandwidth, and a spectral bandwidth of the spectral sub-slice is adjusted according to the target spectral bandwidth.

In an exemplary implementation, an example that the operating frequency point of the spectral sub-slice is adjusted is described as follows: if N78 has a spectral range of 3300-3800MHz, N78 is divided into three bands including band A (3300-3500MHz), band B (3500-3700MHz), and band C (3700-3800MHz), which are respectively assigned to different users and services. By the band division described herein, slicing control within a specific spectral range can be achieved in a way of a variable filter. When it is detected that the target operating frequency point differs from the current operating frequency point, for example, the current operating frequency point is 3400MHz, but the target operating frequency point is 3600MHz, there is a 200MHz difference between the current operating frequency point and the target operating frequency point, and the operating frequency point of the spectral sub-slice of the application service slice should be distributed to a spectral band corresponding to the target operating frequency point on the original basis, and the operating frequency point of the spectral sub-slice of the application service slice is adjusted as the target operating frequency point.

In an exemplary implementation, an example that the spectral bandwidth of the spectral sub-slice is adjusted is described as follows: if N78 has a plurality of bandwidth values including 10M, 20M, 40M, 50M, 60M, 80M, 90M, and 100M, and different service demands and network conditions correspond to different bandwidths, the current service throughput is divided into corresponding interval level ranges such as 100Mbps, 200Mbps, 400Mbps, 500Mbps, 600Mbps, 800Mbps, 900Mbps, 1000Mbps or above. The corresponding spectral bandwidth obtained when the service throughput is 100Mbps is 10M, the corresponding spectral bandwidth obtained when the service throughput is 200Mbps is 20M, the rest is analogized in turn; and when the target throughput is 300Mbps, and the current throughput is 100Mbps, it is proven that there is a certain difference between the current throughput and the target throughput of the spectral sub-slice, if a 10M spectral bandwidth corresponding to the current throughput is used for working under the target throughput, service delay and congestion will be caused, and the normal transmission and operation of the service cannot be ensured unless the spectral bandwidth of the spectral sub-slice is adjusted to a 30M spectral bandwidth corresponding to the target throughput. At the same time, different bandwidths are limited and called by different codes, that is, a small bandwidth is called for a low-throughput service, and a large bandwidth is called for a high-throughput service. In addition, different NR spectral bandwidths are called due to different uplink quality requirements. If there is a requirement on the uplink communication quality, a value such as an error vector magnitude (called EVM for short) can also be adjusted, and thus, an NR bandwidth value within an EVM threshold range needs to be called. With frequency band N1 as an example, if the EVM is required to be smaller than 1.5%, bandwidths smaller than 20M of N1 can be only called; if the EVM is required to be smaller than 2%, bandwidths smaller than 30M of N1 can be called; and if the EVM is required to be smaller than 3%, bandwidths smaller than 40M of N1 can be called.

In an exemplary implementation, when the spectral sub-slice is a shared spectral slice, the operating frequency point of the spectral sub-slice includes an NR operating frequency point (5G) and an LTE operating frequency point (4G), and the spectral bandwidth of the spectral sub-slice includes an NR spectral bandwidth (5G) and an LTE spectral bandwidth (4G); values and proportions of the NR operating frequency point and the LTE operating frequency point in the spectral sub-slice are adjusted according to the target operating frequency point; and values and proportions of the NR spectral bandwidth and the LTE spectral bandwidth in the spectral sub-slice are adjusted according to the target spectral bandwidth. For example, when NR and LTE work on the same FDD frequency band, such as N1, N3, N5, N7, and N8 as well as LTE B1, B3, B5, B7, and B8, the throughput can be enhanced by adjusting a shared spectrum, for example, N1 borrows the spectrum of LTE B1, the bandwidth of N1 is more flexible and can be such as 30MHz, 40MHz, and 50MHz, and therefore, a throughput under a corresponding spectrum can be increased through such sharing. A traditional shared spectrum cannot be sliced, that is, it is a unified spectrum sharing mode, but different from that, a range, interval and bandwidth of spectrum sharing can be adjusted by the spectrum sub-slice; and by detecting the signal quality, throughput demands or mutual interference conditions of LTE and NR of the shared spectrum, dynamic spectral slice sharing is performed, and the frequency range, which is shared with a frequency range of NR, of LTE is determined.

At step 404, a parameter of an antenna sub-slice of the application service slice is adjusted according to the service demand parameter and the current network parameter.

In an exemplary implementation, when the sub-slice is an antenna sub-slice, the service demand parameter is a target throughput, and the current network parameter is a current throughput; the number of target antennae corresponding to the target throughput and the number of current antennae corresponding to the current throughput are respectively acquired according to a preset corresponding relation between the throughput and the number of the antennae; the number of antennae of the antenna sub-slice is adjusted according to a difference between the number of the target antennae and the number of the current antennae; a target single frequency point bandwidth corresponding to the target throughput and a current single frequency point bandwidth corresponding to the current throughput are respectively acquired according to a preset corresponding relation between the throughput and the single frequency point bandwidth; and a single frequency point bandwidth of the antenna sub-slice is adjusted according to a difference of the target single frequency point bandwidth and the current single frequency point bandwidth.

In an exemplary implementation, an example that the number of the antennae of the antenna sub-slice is adjusted is described as follows: there are more than ten 4G-5G antennae on a 5G terminal. When the terminal works in a single-frequency-band SA mode, there are at least two antennae and at most four antennae. When the terminal works in an NR CA mode, such as N41-N79, there are at most eight antennae, and when the terminal works in an NSA mode, the number of the antennae is further decided by the number of current LTE anchors. For example, when B3(4)+N78(4) is adopted, the number of the antennae can be eight, and when B1(4)+B3(4)+B8(2)+N78(4) is adopted, and B1 and B3 do not share the antennae, the number of the antennae can be fourteen. A terminal antenna mode is divided into a plurality of modes including a single-antenna mode, a double-antennae mode, a three-antennae mode, and an N-antennae mode by an antenna slicing module, a throughput limit corresponding to a certain number of antennae is set to be a certain threshold, for example, a throughput lower than 500M corresponds to two antennae, a throughput within a range of 500M-1600M corresponds to four antennae, a throughput within a range of 1600M-2400M corresponds to eight antennae, and a throughput higher than 2400M corresponds to ten antennae. By means of internal driver codes and configuration files of the terminal, the number of different 4G-5G antennae started by the terminal and the antenna starting sequence is controlled , and thus, slicing control based on the number of the antennae is performed.

In an exemplary implementation, an example that the single frequency point bandwidth of the antenna sub-slice is adjusted is described as follows: a bandwidth of an antenna includes two parts including a single frequency point bandwidth and a total support bandwidth; for bandwidths of TDD and FDD frequency bands, a radio frequency chip of the terminal can support bandwidths 5M, 10M, 15M, 20M, 30M, 40M, 50M, 60M, 70M, 80M, 90M, and 100M; and for a carrier aggregation frequency band, a higher bandwidth such as 200M or higher can be further supported. Frequency band ranges that can be supported by the terminal for a certain operating line or frequency band are also different. For example, a frequency band range supported by operator A is expressed as FreA=3500MHz-3600MHz, a frequency band range supported by operator B is expressed as FreB=3400MHz-3700MHz, a frequency band range supported by operator C is expressed as FreC=3300MHz-3800MHz. If a throughput demand is higher, a required single frequency point bandwidth is larger, more frequency point channels need to be supported for the throughput, and a required antenna coverage bandwidth is larger. Herein, operating frequency points of antennae are sliced to corresponding required ranges by antenna matching or antenna tuning adjustment, and frequency points, bandwidths and ranges exceeding slicing demands are shielded or weakened.

In an exemplary implementation, a resonance depth of a frequency point of the antenna sub-slice can be further adjusted, which is exampled as follows: when the terminal has a high demand for the antenna efficiency on a certain frequency band, frequency point or channel, fixed-point slicing control can be performed, the resonance depth of the frequency point is enhanced to a target threshold requirement by adjusting antenna matching until the signal intensity or throughput satisfies the threshold requirement.

In an exemplary implementation, a working mode of the application service slice or the terminal can be further adjusted according to the current network parameter.

In an exemplary implementation, when the current service demand has a high throughput, a mobile phone will be sliced to enter a large-bandwidth and multi-mimo mode. When the current service demand is lagged in an LTE mode, the mobile phone will be sliced to enter an NR mode, and when an LTE anchor signal in an NSA mode is instable, the mobile phone will be sliced to enter an SA mode. When the current service demand is lagged in an LTE non-CA mode, and a 5G NR signal is weak, the mobile phone will be sliced to enter an LTE CA link combination with a strong signal. When single NR cannot satisfy a service scenario, the mobile phone will be sliced to enter an LTE CA and NR combined mode or an NR CA mode. When the current service demand is lagged in a certain SRS 1T2R mode, the mobile phone will be sliced to enter a 1T4R or 2T4R SRS mode with higher signal quality. When the service demand is lagged in an SISO or main diversity mode, the mobile phone will be sliced to enter an NR MIMO mode. When the current service demand has a problem of uplink lagging or interruption, the mobile phone will be sliced to enter a power priority mode.

Example 1: if high-traffic game software or program and a slice monitoring program are required to be downloaded currently, with mimo circuit control on NR hard slicing, such as N78 mimo slicing control, as an example, when a user demand is a small traffic and throughput, a control signal controls NR to enter a 1*1 mimo or 2*2 mimo mode; and when the user demand is a large traffic and throughput, the control signal controls NR to enter a 4*4 mimo mode. After the terminal receives a control instruction, a corresponding RX mimo circuit and antenna of N78 are disconnected or connected, an RFC RF drive is configured, the mobile phone is forced to enter different MIMO slicing modes until the throughput reaches a target threshold requirement.

Example 2: an example of slice adjustment in an SRS mode: in view of a current peak throughput demand or peak throughput stability demand: hardware or software SRS slicing control on the terminal side is performed. With an SRS mode of NR hard slicing as an example, different network and service threshold slicing demands are detected by a multiway switch, a circuit switch logic is controlled, the current SRS mode of the terminal is forcedly changed into a plurality of modes such as PMI, 1T2R, 2T4R, and 1T4R. Or a soft slicing control unit is adopted to configure the RF driver program by calling different SRS slicing, specifically, under corresponding throughput service demands, the terminal is set to be in a plurality of modes such as RFC_SRS_PMI, RFC_SRS_1T2R, RF3_SRS_1T4R, and RFC SRS 2T4R by means of the radio frequency driver codes (RFC).

Example 3: in view of a service demand on a high uploading throughput required currently, uplink duplexing circuit control is performed by NR hard slicing. With uplink duplexing of N78 as an example, if a throughput of an uplink service of a user is higher, and the current uploading throughput cannot satisfy a service demand of the user, N78 can be forced to enter an uplink mimo duplexing transmission mode by slicing control, that is, tx1 and tx2 links work at the same time; and if the throughput of the uplink service demand of the user is low, and the current uplink throughput is redundant, slicing is performed to enter a single NR transmission mode.

In the implementation of the present disclosure, on the basis of other embodiments, the parameter of each sub-slice of the application service slice can be further adjusted in various ways, so that the diversity of adjusting the application service slice is improved.

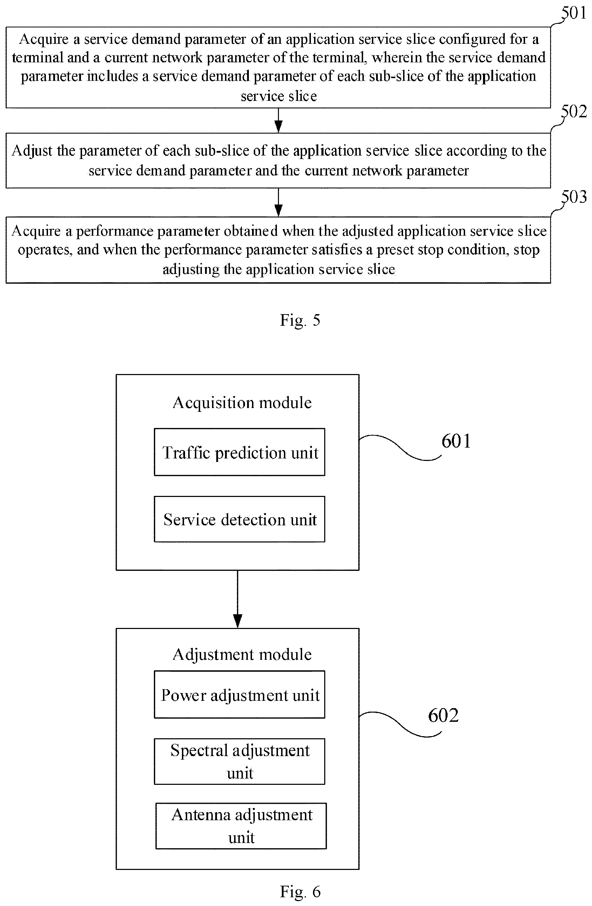

An embodiment of the present disclosure relates to a service slice adjustment method applied to a terminal side, as shown in Fig. 5, including the following steps.

At step 501, a service demand parameter of an application service slice configured for a terminal and a current network parameter of the terminal are acquired, wherein the service demand parameter includes a service demand parameter of each sub-slice of the application service slice.

In an exemplary implementation, the present step is approximately the same as step 101 in the embodiment of the present disclosure, and therefore, the repeated description thereof is omitted herein.

At step 502, the parameter of each sub-slice of the application service slice is adjusted according to the service demand parameter and the current network parameter.

In an exemplary implementation, the present step is approximately the same as step 102 in the embodiment of the present disclosure, and therefore, the repeated description thereof is omitted herein.

At step 503, a performance parameter obtained when the adjusted application service slice operates is acquired, and when the performance parameter satisfies a preset stop condition, adjusting of the application service slice is stopped.

In an exemplary implementation, after one-time adjustment for the application service slice is completed, the application service slice operates, and the performance parameter (which can be information such as a packet loss probability, an error code rate, and a delay) obtained when the application service slice operates is acquired by analysing an operation parameter collected when the application service slice operates, and when the performance parameter satisfies the preset stop condition (that is, the current service demand is satisfied), adjusting of the application service slice can be stopped, or else, the application service slice is further adjusted.

In the implementation of the present disclosure, on the basis of other embodiments, after one-time adjustment for the application service slice is completed, a current performance of the application service slice is detected, and adjusting of the application service slice is stopped when the performance satisfies the preset condition, so that the service slice adjustment method provided in the present disclosure can be used for closed-loop feedback control to accurately determine whether to stop adjusting the service slice.

Another embodiment of the present disclosure relates to a service slice adjustment apparatus. Details of the service slice adjustment apparatus in this embodiment will be described below in an exemplary implementation, the following contents are only implementation details provided for facilitating understanding, but are not necessary for implementing this embodiment. Fig. 6 is a schematic diagram of the service slice adjustment apparatus in this embodiment, which includes an acquisition module 601 and an adjustment module 602.

The acquisition module 601 is used for acquiring a service demand parameter of an application service slice configured for a terminal and a current network parameter of the terminal, wherein the service demand parameter includes a service demand parameter of each sub-slice of the application service slice.

In an exemplary implementation, the acquisition module 601 can further include a traffic prediction unit 6011 and a service detection unit 6012.

The traffic prediction unit 6011 is used for acquiring the service demand parameter of the application service slice according to the first or second method mentioned in step 101 in the implementation of the present disclosure.

The service detection unit 6012 is used for acquiring the service demand parameter of the application service slice according to the third or fourth method mentioned in step 101 in the implementation of the present disclosure.

The adjustment module 602 is used for adjusting the parameter of each sub-slice of the application service slice according to the service demand parameter and the current network parameter.

In an exemplary implementation, the adjustment module 602 can further include a power adjustment unit 6021, a frequency adjustment unit 6022, and an antenna adjustment unit 6023.

The power adjustment module 6021 is used for adjusting a parameter of a power sub-slice of the application service slice according to the service demand parameter and the current network parameter.

The frequency adjustment unit 6022 is used for adjusting a parameter of a frequency sub-slice of the application service slice according to the service demand parameter and the current network parameter.

The antenna adjustment unit 6023 is used for adjusting a parameter of an antenna sub-slice of the application service slice according to the service demand parameter and the current network parameter.

In an exemplary implementation, the service slice adjustment apparatus may further include a hard slicing adjustment manner unit and a soft slicing program adjustment manner unit which have an effect of providing the adjustment module with two manners in performing slice parameter adjustment.

In an exemplary implementation, the service slice adjustment apparatus may further include an adjustment determination unit which has an effect of determining an adjustment stepping and an adjustment manner by which the adjustment module performs slice parameter adjustment.

In an exemplary implementation, the service slice adjustment apparatus may further include an adjustment sequence unit which has an effect of determining a sequence in which the power adjustment unit, the frequency adjustment unit and the antenna adjustment unit are adjusted by the adjustment module.

In an exemplary implementation, the service slice adjustment apparatus may further include a parameter storage unit which has an effect of storing data such as relevant parameters of each service slice as well as peak uplink and downlink throughputs of each service slice under different configurations.

It is not difficult to find that this embodiment is a system embodiment corresponding to the above-mentioned method embodiments and can be implemented by cooperation with the above-mentioned method embodiments. Relevant technical details and technical effects mentioned in the above-mentioned embodiments are still valid in this embodiment, but are not repeated for reducing repetition. Accordingly, the relevant technical details mentioned in this embodiment can also be applied to the above-mentioned embodiments.

It is worth mentioning that all modules related to this embodiment are logic modules. In actual applications, one logic unit may be one physical unit or a part of one physical unit or a combination of a plurality of physical units. In addition, in order to highlight an innovative part of the present disclosure, units that are not closely related to the resolution of technical issues put forward in the present disclosure are not introduced to this embodiment, but it does not mean that there are no other units in this embodiment.

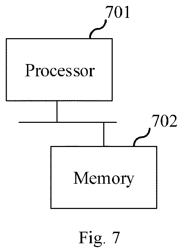

Another embodiment of the present disclosure relates to an electronic device, as shown in Fig. 7, including at least one processor 701; and a memory 702 in communication connection with the at least one processor 701; wherein the memory 702 stores an instruction executable by the at least one processor 701, and the instruction is executed by the at least one processor 701 to enable the at least one processor 701 to execute the service slice adjustment method in each of the above-mentioned embodiments.

The memory and the processor are connected by a bus which may include any number of buses and bridges interconnected with each other and by which various circuits of one or more processors and the memory are connected together. The bus may also connect various other circuits such as a peripheral device, a voltage stabiliser and a power management circuit together, which is known by those skilled in the art. Therefore, the further description for the bus is omitted herein. A bus interface is provided with an interface between the bus and a transceiver. The transceiver can be one or more elements such as a plurality of receivers and transmitters and is provided with units communicating with various other apparatuses on a transmission medium. Data processed by the processor is transmitted on a wireless medium through antennae. Further, the antennae further receive the data and transmit the data to the processor.

The processor takes charge of managing the bus and general processing, and can also provide various functions including timing, peripheral interface, voltage adjustment, power management and other control functions. The memory can be used for storing data used when the processor performs an operation.

Another embodiment of the present disclosure relates to a computer-readable storage medium, storing a computer program. The computer program, when executed by a processor, implements the above-mentioned method embodiments.

That is, it can be understood by those skilled in the art that all or parts of steps of the methods in the above-mentioned embodiments can be completed by a program instructing relevant hardware. The program is stored in a storage medium and includes a plurality of instructions for enabling one device (which can be a single chip microcomputer, a chip, etc.) or a processor to perform all or parts of the steps of the method in each of the embodiments of the present disclosure. The above-mentioned storage medium includes various media, such as a USB flash disk, a mobile hard disk, an ROM (Read-Only Memory), an RAM (Random Access Memory), a diskette or an optical disk, capable of storing program codes.

It can be understood by those of ordinary skill in the art that all of the above-mentioned implementations are specific embodiments for implementing the present disclosure. In actual applications, various changes can be made in form and detail without departing from the spirit and scope of the present disclosure.

## Claims

1. A service slice adjustment method, applied to a terminal, and the method comprising:
acquiring a service demand parameter of an application service slice configured for a terminal and a current network parameter of the terminal, wherein the service demand parameter comprises a service demand parameter of each sub-slice of the application service slice; and
adjusting a parameter of each sub-slice of the application service slice according to the service demand parameter and the current network parameter.

2. The service slice adjustment method of claim 1, wherein adjusting the parameter of each sub-slice of the application service slice according to the service demand parameter and the current network parameter comprises:
selecting a slice adjustment mode corresponding to the application service slice from preset slice adjustment modes according to the service demand parameter, wherein the slice adjustment mode is used for indicating an adjustment sequence of the parameter of each sub-slice of the application service slice; and
adjusting the parameter of each sub-slice of the application service slice according to the service demand parameter, the current network parameter, and the slice adjustment mode corresponding to the application service slice.

3. The service slice adjustment method of claim 1, wherein before adjusting the parameter of each sub-slice of the application service slice according to the service demand parameter and the current network parameter, further comprising:
acquiring a parameter variation value according to the service demand parameter and the current network parameter; and
acquiring an adjustment stepping and an adjustment manner for adjusting the parameter of each sub-slice of the application service slice according to the parameter variation value.

4. The service slice adjustment method of claim 1, wherein adjusting the parameter of each sub-slice of the application service slice according to the service demand parameter and the current network parameter comprises:
adjusting the parameter of each sub-slice of the application service slice in a hard slicing circuit adjustment manner or a soft slicing program adjustment manner.

5. The service slice adjustment method of claim 1, wherein upon the condition that the sub-slice is a power sub-slice, the service demand parameter is a target uplink power parameter, and the current network parameter is a current uplink power parameter; and
adjusting the parameter of each sub-slice of the application service slice according to the service demand parameter and the current network parameter specifically comprises:
adjusting an uplink power parameter of the power sub-slice according to the target uplink power parameter upon the condition that the target uplink power parameter differs from the current uplink power parameter.

6. The service slice adjustment method of claim 5, wherein the uplink power parameter comprises a master antenna power parameter and a standby antenna power parameter; and
adjusting the uplink power parameter of the power sub-slice according to the target uplink power parameter comprises:
adjusting the master antenna power parameter of the power sub-slice according to the target uplink power parameter; and
adjusting, in response to that the master antenna power parameter satisfies a preset power limit, the standby antenna power parameter of the power sub-slice according to the target uplink power parameter, wherein the standby antenna power parameter of the power sub-slice is adjusted in a manner of modifying a power level, or calibrating a maximum target power, or performing power compensation.

7. The service slice adjustment method of claim 5, wherein upon the condition that the power sub-slice is a shared power slice, the uplink power parameter comprises a new radio called NR power parameter and a long term evolution called LTE anchor power parameter; and
adjusting the uplink power parameter of the power sub-slice according to the target uplink power parameter comprises:
adjusting, according to the target uplink power parameter, value and proportion of the NR power parameter in the power sub-slice and value and proportion of the LTE anchor power parameter in the power sub-slice.

8. The service slice adjustment method of claim 1, wherein upon the condition that the sub-slice is a spectral sub-slice, the service demand parameter is a target operating frequency point and a target throughput, and the current network parameter is a current operating frequency point and a current throughput; and
adjusting the parameter of each sub-slice of the application service slice according to the service demand parameter and the current network parameter comprises:
adjusting, in response to that the target operating frequency point differs from the current operating frequency point, an operating frequency point of the spectral sub-slice according to the target operating frequency point; and
acquiring, in response to that the target throughput differs from the current throughput, a target spectral bandwidth corresponding to the target throughput from a preset correspondence between a throughput and a spectral bandwidth, and adjusting a spectral bandwidth of the spectral sub-slice according to the target spectral bandwidth.

9. The service slice adjustment method of claim 8, wherein upon the condition that the spectral sub-slice is a shared spectral slice, the operating frequency point of the spectral sub-slice comprises an NR operating frequency point and an LTE operating frequency point, and the spectral bandwidth of the spectral sub-slice comprises an NR spectral bandwidth and an LTE spectral bandwidth;
adjusting the operating frequency point of the spectral sub-slice according to the target operating frequency point comprises:
adjusting, according to the target operating frequency point, value and proportion of the NR operating frequency point in the spectral sub-slice and value and proportion of the LTE operating frequency point in the spectral sub-slice; and
adjusting the spectral bandwidth of the spectral sub-slice according to the target spectral bandwidth comprises:
adjusting, according to the target spectral bandwidth, value and proportion of the NR spectral bandwidth in the spectral sub-slice and value and proportion of the LTE spectral bandwidth in the spectral sub-slice.

10. The service slice adjustment method of claim 1, wherein upon the condition that the sub-slice is an antenna sub-slice, the service demand parameter is a target throughput, and the current network parameter is a current throughput; and
adjusting the parameter of each sub-slice of the application service slice according to the service demand parameter and the current network parameter comprises:
acquiring a number of target antennae corresponding to the target throughput and a number of current antennae corresponding to the current throughput respectively according to a preset correspondence between a throughput and a number of antennae;
adjusting a number of antennae of the antenna sub-slice according to a difference between the number of the target antennae and the number of the current antennae;
acquiring a target single frequency point bandwidth corresponding to the target throughput and a current single frequency point bandwidth corresponding to the current throughput respectively according to a preset correspondence between a throughput and a single frequency point bandwidth; and
adjusting a single frequency point bandwidth of the antenna sub-slice according to a difference between the target single frequency point bandwidth and the current single frequency point bandwidth.

11. The service slice adjustment method of claim 1, wherein the acquiring the service demand parameter of the application service slice configured for the terminal comprises:
collecting, upon the condition that the application service slice opened by the terminal is detected, a radio frequency information parameter set of the terminal, performing statistical analysis on the radio frequency information parameter set, and acquiring the service demand parameter of the application service slice; or
acquiring, in response to that the application service slice opened by the terminal is detected, a delay when the application service slice is opened and the application service slice is operated, acquiring a speed of opening the application service slice, and acquiring the service demand parameter of the application service slice according to the delay, the speed, and a preset target threshold; or
using slice network information received from a base station as the service demand parameter of the application service slice; or
receiving the service demand parameter, input by a user, of the application service slice by means of a user interaction interface.

12. The service slice adjustment method of claim 1, wherein after adjusting the parameter of each sub-slice of the application service slice according to the service demand parameter and the current network parameter, further comprising:
acquiring a performance parameter during operation of the adjusted application service slice; and
stopping adjusting the application service slice in response to that the performance parameter satisfies a preset stop condition.

13. An electronic device, comprising:
at least one processor; and
a memory in communication connection with the at least one processor; wherein
the memory stores an instruction executable by the at least one processor, and the instruction is executed by the at least one processor to enable the at least one processor to execute the service slice adjustment method of any one of claims 1 to 12.

14. A computer-readable storage medium, storing a computer program, wherein the computer program, when executed by a processor, implements the service slice adjustment method of any one of claims 1 to 12.
